Europäisches Patentamt

(19) European Patent Office    (11) Publication number: **0 046 343**

Office européen des brevets    **A2**

(12) **EUROPEAN PATENT APPLICATION**

(21) Application number: **81303367.7**    (51) Int. Cl.³: **G 05 B 19/18**

(22) Date of filing: **23.07.81**

(30) Priority: **24.07.80 JP 101521/80**

(71) Applicant: **FUJITSU FANUC LIMITED, 5-1, Asahigaoka, 3-chome, Hino-shi, Tokyo 191 (JP)**

(72) Inventor: **Ryoji, Imazeki, 987-44, Naganuma-cho, Hachioji-shi Tokyo (JP)**
Inventor: **Hiroomi, Fukuyama, 719-644, Yano-cho, Hachioji-shi Tokyo (JP)**
Inventor: **Yoshimasa, Kagawa, 1994-227, Hazama-cho, Hachioji-shi Tokyo (JP)**

(43) Date of publication of application: **24.02.82 Bulletin 82/8**

(74) Representative: **Billington, Lawrence Emlyn et al, HASELTINE LAKE & CO Hazlitt House 28 Southampton Buildings Chancery Lane, London WC2A 1AT (GB)**

(84) Designated Contracting States: **AT BE CH DE FR GB IT LI LU NL SE**

(54) **Numerical control method and apparatus.**

㉗ A method and apparatus for numerically controlling at least two tools which are arranged to move in unison while maintaining a constant positional relationship with respect to one another, the tools being moved relative to a workpiece on the basis of absolute commands to subject the workpiece to a prescribed machining operation. A single current position register (XR, ZR), consisting of one section (XR) for storing X coordinates and one section (ZR) for storing Z coordinates, is provided to store the current position of a first tool. Further provided are arithmetic means (AS), responsive to a command for setting coordinates, for computing the current position of a second tool which is to be used next, as well as pulse distribution means (PD). The method includes the steps of storing the position of the first tool in the current position register (XR, ZR) prior to machining the workpiece with that tool, moving the first tool to machine the workpiece on the basis of the current position and an absolute command, computing the current position of the second tool by the arithmetic means (AS) in response to the command for setting coordinates in effecting a changeover from the first tool to the second tool, storing the computed current position in the current position register (XR, ZR), and moving the second tool to machine the workpiece on the basis of the content of the current position register (XR, ZR) and an absolute command.

. 0046343

## NUMERICAL CONTROL METHOD AND APPARATUS

This invention relates to a numerical control method and appratus and more particularly to a numerical control method and apparatus for a machine tool of the type wherein a plurality of tools, which are moved in unison and which have a fixed positional relationship with respect to one another, are moved on the basis of absolute commands, a workpiece being machined successively by selected ones of the tools.

A machine tool such as a lathe is provided with a plurality of tools that are firmly mounted on a tool rest. To execute a machining operation, desired ones of these tools are selected depending upon whether rough or fine cutting is required. Turning and drilling tools and the like may also be selected as the machining operation progresses.

A machining program tape for a machine of the described type ordinarily includes a mixture of position commands for the various tools. It is advantageous in terms of programming if the position commands are expressed as absolute commands, since the coordinates of the position to which a tool is to be moved need merely be commanded in the form of a position, a very simple operation for the programmer. To make this possible, the numerical control device is adapted to internally compute an incremental value, namely the difference between the current position of the tool and the position to which the tool is to be moved, and to execute a pulse distributing operation on the basis of the incremental value. In other words, the numerical control device must constantly be aware of the current position of the tool when an absolute command is issued. To this end, the following three methods have been proposed as numerical control methods for controlling a machine tool of the type having a plurality of tools whose coordinates differ from one another, wherein desired tools are selected as machining progresses in order to subject a workpiece to a number of machining operations such as turning and the like. The three methods are:

(1) providing a current position register for each of the tools, and computing the incremental value from the value specified by the absolute command and the data stored in the current position register of the selected tool;

(2) providing a single current position register, and restoring a second tool to a specified position, such as reference point, to clear the content of the register before the second tool is to machine the workpiece and after machining by the first tool has been completed; and

(3) providing a single current position register, and entering the current position of a second tool, by means of a keyboard or the like, before the second tool is to machine the workpiece after the machining by the first tool has been completed.

Since all of the tools move in unison, the method (1) is disadvantageous because the current positions of each of the plurality of tools must be computed and stored in the registers whenever the tools are moved. This requires considerable time for computations, leading to a decline in machining efficiency. With the method (2) there is the requirement for the restoration to the reference point each time a tool is changed. This lengthens machining time and seriously lowers machining efficiency. The method (3) requires that the operator manually calculate and enter the current position of the new tool whenever tools are changed. This is a time-consuming and troublesome operation.

According to a first aspect of the present invention there is provided a method of numerically controlling at least two tools which are arranged to move in unison while maintaining a constant positional relationship with respect to one another, the tools being moved relative to a workpiece on the basis of absolute commands to subject the workpiece to a prescribed machining operation, which method comprises the steps of:

storing the current position of one tool in a current position register prior to machining the workpiece with said one tool;

moving said one tool to machine the workpiece by executing a pulse distribution operation on the basis of the current position and an absolute command;

computing the current position of another tool by arithmetic means in response to a command for setting coordinates;

storing the computed current position of said another tool in said current position register; and

moving said another tool to machine the workpiece by executing a pulse distribution operation on the basis of the content of said current position register and an absolute command;

whereby the workpiece is machined first by said one tool and then by said another tool.

According to a second aspect of the present invention there is provided an apparatus for numerically controlling at least two tools which are arranged to move in unison while maintaining a constant positional relationship with respect to one another, when the apparatus is in use the tools being moved relative to a workpiece on the basis of absolute commands to subject the workpiece to a presecribed machining operation, which apparatus comprises:

a current position register for storing the current position of one tool;

a pulse distributing circuit for executing a pulse distribution operation on the basis of the current position and an absolute command;

computing means for computing the current position of another tool in response to a command for setting coordinates and memorizing the computing result therein, and

instructing means for instructing command data for setting the coordinates in addition to machining program data; wherein the workpiece is to be machined first by said one tool and then by said another tool.

According to a third aspect of the present invention there is provided an apparatus for use in numerically controlling at least two tools which are arranged to move in unison while maintaining a constant positional relationship with respect to one another, the tools being movable relative to a workpiece on the basis of absolute commands to subject the workpiece to a prescribed machining operation, which apparatus comprises:

a current position register for storing the current position of one tool prior to machining the workpiece with said one tool;

a pulse distributor for use in moving said one tool to machine the workpiece by executing a pulse distribution operation on the basis of the current position and an absolute command;

arithmetic means for use in computing the current position of another tool in response to a command for setting coordinates;

the arrangement being such that when the apparatus is in use the computed current position of said another tool may be stored in said current position register, and

said another tool moved to machine the workpiece by executing a pulse distribution operation on the basis of the content of said current position register and an absolute command, whereby the workpiece may be machined first by said one tool and then by said another tool.

An example of the present invention may provide a numerical control method and apparatus for application to a numerical control device for a machine tool which employs a plurality of tools selectively to machine a workpiece, which method and apparatus requires only a current position register for one tool without any decline in machining efficiency. It may further provide a numerical control method and apparatus which can decrease the computing time of the current position and allow an NC unit to have enough time for performing various numerical control treatments.

Other features and advantages of embodiments of the present invention will be apparent from the following description taken in conjunction with the accompanying drawings, in which:

Fig. 1 is an illustrative view useful in describing the positional relationship between a workpiece and tools:

Figs.2 (A) through 2(E) are illustrative views useful in describing a numerical control method in accordance with the present invention;

Fig. 3 is a table showing the relationship between

the contents of a current position register and tool nose positions in each step of a machining program; and

Fig. 4 is a block diagram of a numerical control device for practicing the numerical control method of the present invention.

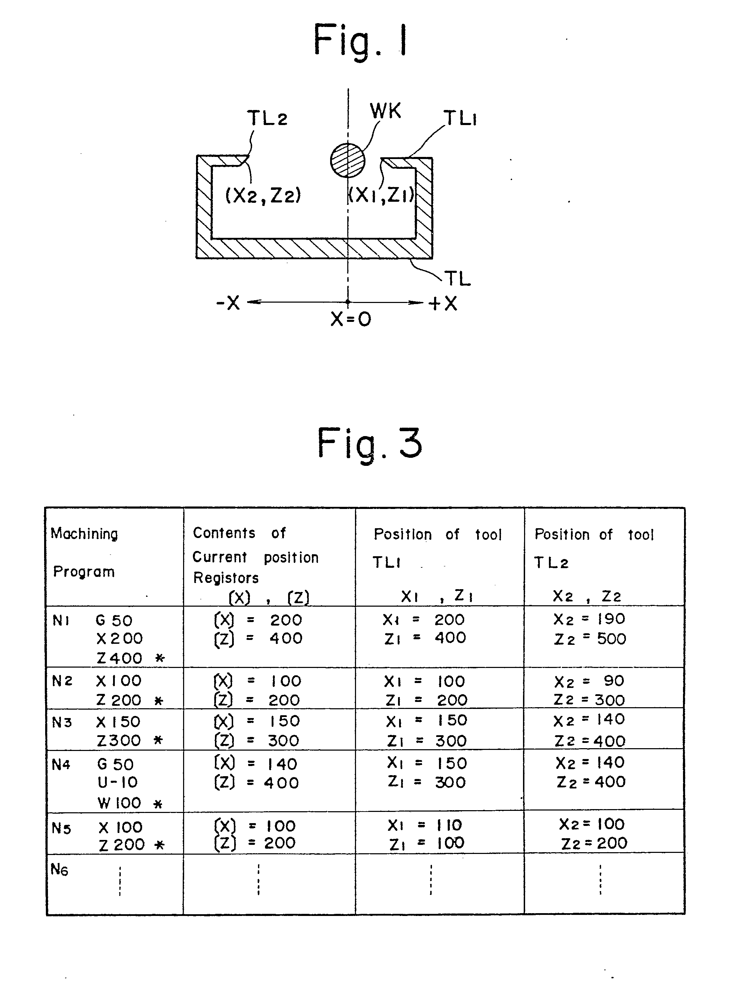

Referring first to Fig. 1, a workpiece WK having the shape of a round bar is fixed rigidly by means of a chuck provided on a lathe, neither the chuck nor the lathe being shown in the drawings. The center of the workpiece WK lies on a line given by $X = 0$ in Fig. 1. Fixedly secured to a tool holder TL on either side of the workpiece WK are two tools $TL_1$, $TL_2$. Since the tools $TL_1$, $TL_2$ are fixed to the same tool holder TL, moving the tool holder to bring one tool into use causes the other tool to follow the movement of the first, so that a fixed positional relationship is maintained between the two tools at all times. In other words, the spacing between the noses of the two tools when projected on the X-axis and when projected on the Z-axis is constant. Accordingly, letting the coordinates $(X_1, Z_1)$, $(X_2, Z_2)$ represent the tool nose positions of the respective tools $TL_1$, $TL_2$ permits us to write

$$X_1 - X_2 = u \quad \text{(constant)}$$
$$Z_1 - Z_2 = w \quad \text{(constant)}.$$

These relationships will hold at all times.

In accordance with the present invention, only one current position register is provided, and the arrangement is such that when machining by one tool, say the tool $TL_1$, is completed, the operations

$$X_1 - u \to X_2$$

$$Z_1 - w \to Z_2$$

0046343

are performed before machining by the tool $TL_2$ starts.  The result of these operations provides the current position $(X_2, Z_2)$ of the nose of tool $TL_2$.  It should be noted that the current position $(X_1, Z_1)$ of the tool $TL_1$/is stored in the current position register as long as tool $TL_1$ is the active tool.

When machining by the other tool $TL_2$ is completed, the operations

$$X_2 - u \to X_1$$

$$Z_2 - w \to Z_1$$

are performed before machining by the tool $TL_1$ starts.  The result of these operations provides the current position $(X_1, Z_1)$ of the nose tool $TL_1$.  The current position $X_2$, $Z_2$ of the tool $TL_2$ is stored in the current position register as long as tool $TL_2$ is the active tool.  The changeover from one tool to the other is performed by a G-function command (G50) for setting coordinates, the command being included in the machining program.

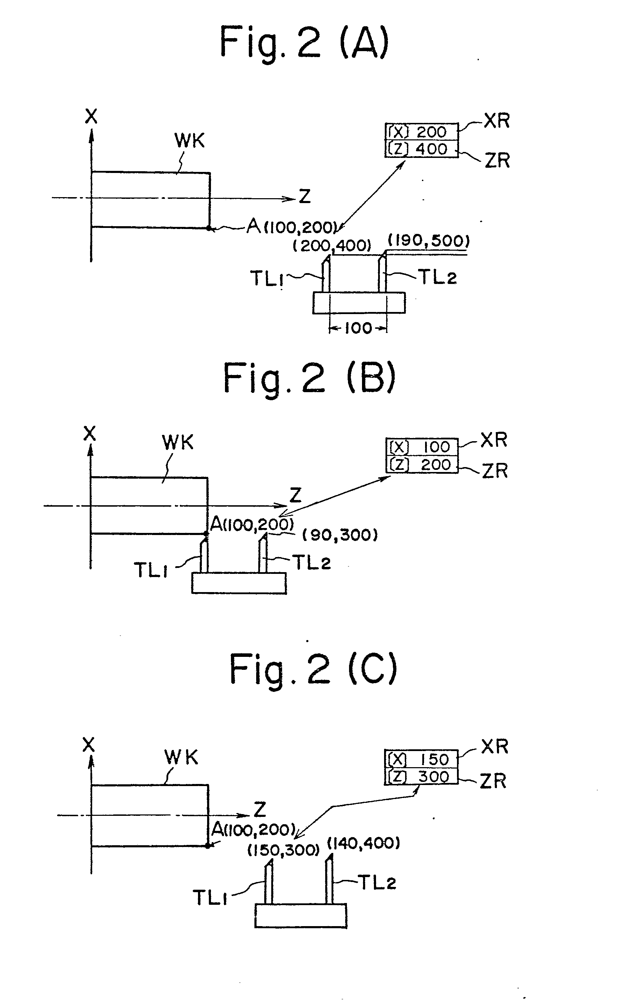

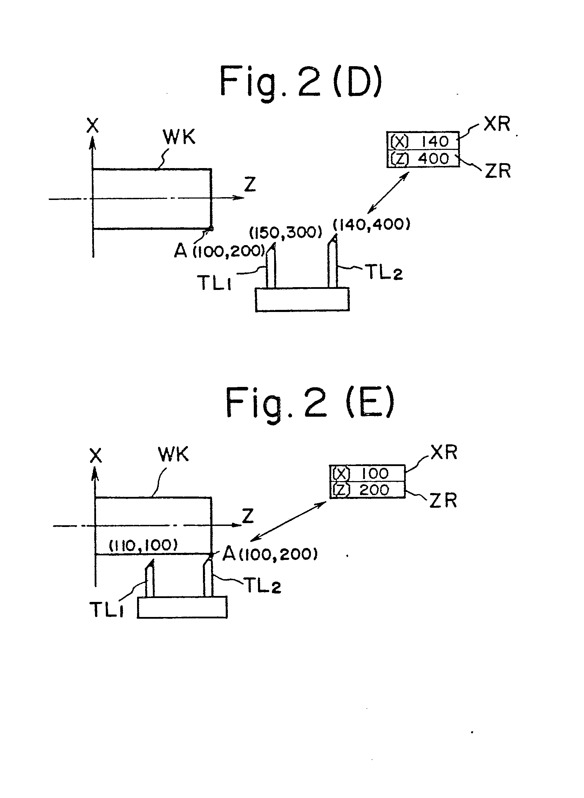

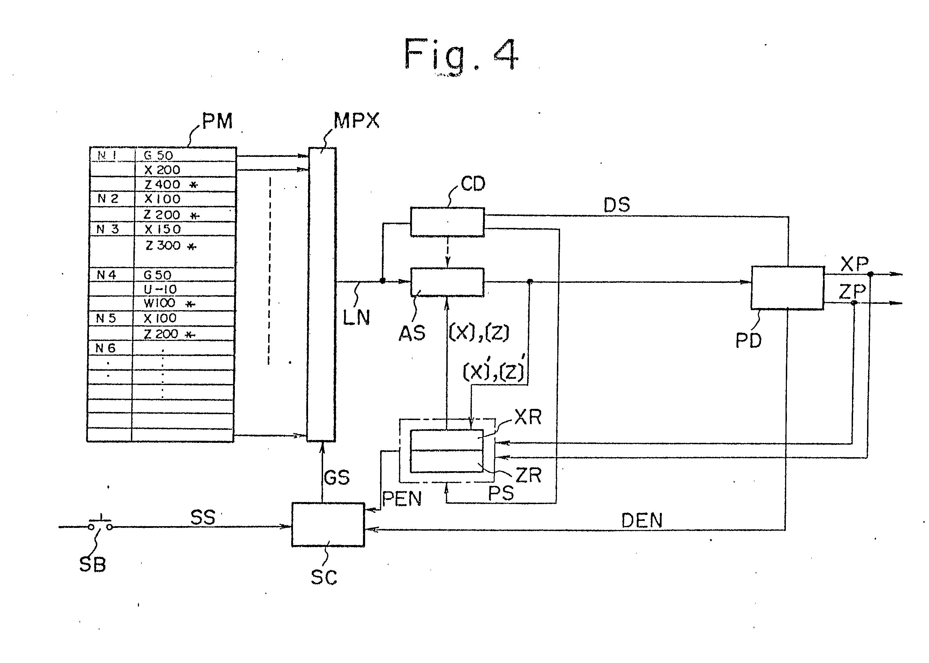

The views of Fig. 2 are illustrative of  a  numerical control method / which is in accordance with the present invention.  Specifically, Fig. 2(A) shows the positional relationship between the workpiece WK and the tools $TL_1$, $TL_2$ as well as the contents of the current position register, immediately after coordinates have been set.  Fig. 2(B) is a similar view following positioning at a machining position (point A).  Fig. 2(C) is a similar view following a retraction operation, Fig. 2(D) is a similar view following setting of coordinates, and Fig. 2(E) is a similar view following positioning at the machining position (point A). Fig. 3 is a table showing the relationship among command data in each step of a machining program stored on a recording medium such as an NC tape, the content of the current position register following the execution of the program steps, and the current positions of the tools $TL_1$, $TL_2$.

In Fig. 2, XR, ZR denote current position register sections for the X- and Z-axes, these register sections constituting a single register unit. The distance between the nose of the tool $TL_1$ and the nose of the tool $TL_2$ is 10 along the X-axis, and 100 along the Z-axis, these distances being constant as mentioned above. In Fig. 3, $N_i$ ($N_1$, $N_2$...) in the machining program data column denotes a sequence number, G50 denotes a preparatory function command for setting coordinates, X 0...0 and Z 0...0 denote absolute values along the X- and Z-axes, respectively, and U 0...0, W 0...0 denote incremental values along the X- and Z-axes, respectively. When absolute values follow the G50 command, such as when G50X 0...0 Z 0...0* is commanded, the command data presets the current position registers XR, ZR to the numerical values which follow the letters X and Z, threby establishing the coordinates. When incremental values follow the G50 command, such as when G50 U 0...0 W 0...0 is commanded, the command data presets the current position registers XR, ZR to the values [X] + U, [Z] + W, thereby establishing the coordinates. [X] and [Z] are the contents of the X-axis and Z-axis registers, respectively.

Before the command data is read in, the tool $TL_1$ is positioned at the location specified by $X_1$ = 200, $Z_1$ =

400, as by a manual operation or the like. The command data at sequence number $N_1$ of the machining program is now read in the numerical control device, whereupon the values 200 and 400 are preset in the current position registers XR, ZR, respectively. In other words, the above operation sets the coordinates $(X_1, Z_1)$ of the tool $TL_1$ in the respective current position registers XR, ZR. The coordinates of the tool $TL_2$ at this time are $X_2 = 190$, $Z_2 = 500$, as shown in Fig. 2(A).

Next, under the control of the numerical control device, the tool $TL_1$ is moved toward the machining point A (by moving the tool holder) in accordance with the command data at sequence number $N_2$, until it is positioned at the point A, as shown in Fig. 2(B). The position of tool $TL_1$ is now given by $X_1 = 100$, $Z_1 = 200$, and that of tool $TL_2$ is given by $X_2 = 90$, $Z_2 = 300$. The contents [X], [Z] of the respective current position registers XR, ZR indicate the current position of the tool $TL_1$, namely [X] = 100, [Z] = 200.

The workpiece WK is now machined by the tool $TL_1$ under the control of the numerical control device, this operation not being described here. Following machining, the tool holder is retracted in accordance with the command data at sequence number $N_3$. After retraction, as illustrated in Fig. 2(C), the position of tool $TL_1$ is $X_1 = 150$, $Z_1 = 300$, and that of tool $TL_2$ is $X_2 = 140$, $Z_2 = 400$. The contents [X], [Z] of the registers XR, ZR indicate the current position of the tool $TL_1$, namely [X] = 150, [Z] = 300. When the command data at sequence number $N_4$ is read in under these conditions, the preparatory function command

0046343

G50 for setting coordinates causes arithmetic means (not shown) to perform the operations

$$[X] + u \rightarrow [X]$$

$$[Z] + w \rightarrow [Z]$$

using the numerical values u, w (u = -10, w = 100) that follow the letters U, W, respectively, as well as the contents [X], [Z] of the current position registers XR, ZR. The results of the operations are stored in the shift registers XR, ZR, as shown in Fig. 2(D). Thus, owing to the command data at sequence number $N_4$, the coordinates $X_2$, $Z_2$ of tool $TL_2$ are stored in the current position registers XR, ZR.

The command data at sequence number $N_5$ is read in next. The tool $TL_2$, being carried by the tool holder, makes its approach to the machining point A and stops when positioned at point A, as depicted in Fig. 5(E). The position of tool $TL_1$ is now given by $X_1 = 110$, $Z_1 = 100$, and that of tool $TL_2$ is given by $X_2 = 100$, $Z_2 = 200$. The contents of registers XR, ZR indicate the current position of the nose of tool $TL_2$, namely [X] = 100, [Z] = 200. From this point on the information stored in the current position registers will signify the current position of tool $TL_2$ as long as the preparatory function command G50 for setting coordinates does not appear in the program. To set the current position of the tool $TL_1$ in the current position registers XR, ZR, the command G50 U 10 W-100 * for setting coordinates need only be included in the machining program.

In the foregoing description, $X_1 = 200$, $Z_1 = 400$ were taken as indicating the initial position for the nose

of tool $TL_1$. However, it is also possible to set $X_1$ and $Z_1$ equal to zero ($X_1 = Z_1 = 0$, indicating the origin), and to provide a function that restores the tool $TL_1$ to the origin at the beginning of the operation.

Fig. 4 is a block diagram of a numerical control device for practicing a method / the present invention. according to

A program memory PM sequentially stores the machining data, shown in Fig. 3, starting from the sequence number $N_1$. This is accomplished by means of a tape reader which reads in the machining data from a paper tape, neither the tape reader nor the paper tape being illustrated in the drawings. A multiplexer MPX selects and delivers predetermined machining data from the program memory PM under the control of a sequence control circuit SC. The sequence control circuit SC includes a counter whose content is advanced by, say, a preset end signal (a signal indicating the completion of a presetting operation) and a pulse distribution end signal (a signal indicating the completion of a pulse distribution operation), the arrangement being such that command data is delivered from the program memory PM through the multiplexer MPX in the order of the sequence numbers, on the basis of the value of the count within the counter. The sequence controller SC is actuated by a start button SB. A command discrimination circuit CD is adapted to produce a preset signal PS that presets the result of an operation, performed by an adder-subtractor AS, in the current position registers XR, ZR when the command data is the preparatory fucntion command G50 for setting coordinates, and to produce a distribution start signal DS when the command data is a position command. The adder-subtractor circuit AS performs a predetermined arithmetic operation in accordance with whether an input received from the multiplexer MPX is an incremental command or an absolute command. For example, when the command is an absolute position command (the absolute command being expressed by the numerical values which follow the letter X, Z), the adder-subtractor circuit AS performs the operations

$$X - [X] \text{ and } Z - [Z] \quad \ldots\ldots\ldots\ldots \quad (1)$$

to compute an incremental value which is delivered to a pulse distributor which will be described below. When the command is an absolute command for setting coordinates, on the other hand, the adder-subtractor circuit likewise performs the operations given in (1) above (where $[X] = [Z] = 0$), but the results are preset in the current position registers. When the command is an incremental command for setting coordinates (the incremental command being expressed by the numerical values which follow the letters U, W), the adder-subtractor circuit AS performs the operations

$$U + [X] \text{ and } W + [Z] \quad \ldots\ldots\ldots\ldots \quad (2)$$

with the results of the operations (indicating the current position of the other tool) being preset in the current position registers XR, ZR.

The pulse distributor, denoted at PD, is of the well-known type and is adapted to perform a pulse distribution operation to produce pulses XP, ZP that are sent to X-axis and Z-axis servo control systems (not shown), the servo control systems responding by moving the tool holder along the X- and Z-axis.

Reference will be had to Figs. 2 through 4 to describe system operation. First, the start button SB

is depressed under the conditions shown in Fig. 2(A). This results in the generation of a start signal SS which is applied to the sequence controller SC to start the controller, the latter responding by sending a gate signal GS to the multiplexer MPX. The latter, on the basis of the gate signal, supplies a line LN with the command data at the sequence number $N_1$. This data is the absolute data for setting coordinates and is discriminated as such by the command discrimination circuit CD which consequently delivers the preset signal PS to the current position registers XR, ZR. Meanwhile, the adder-subtractor circuit AS is performing the operations given in (1) above, (where the contents [X], [Z] of the current position registers XR, ZR are initially both zero). The results of these operations, namely [X'], [Z'], are preset in the position registers XR, ZR by the preset signal PS. Following the completion of the presetting operation the current position register unit formed by registers XR, ZR issues a preset end signal PEN which increments, by one count, the counter contained within the sequence control circuit SC. The counter is not shown in the drawings. The result of this operation is that the multiplexer MPX now sends out on line LN the command data at sequence number $N_2$.

Since the command data at sequence number $N_2$ is the absolute position command, the adder-subtractor circuit AS immediately performs the operations given in (1) above and delivers the results, which are incremental values, to the pulse distributor PD. Meanwhile, the fact that the data is a position command is discriminated by the command discrimination circuit CD which sends a pulse distribution start signal DS to the pulse discriminator circuit PD. The latter circuit responds by performing a pulse distribution operation on the basis of the abovementioned incremental values. Thus, distributed pulses XP, ZP are delivered successively for movement in the X- and Z-directions. The pulses XP, ZP are applied to the servo systems (not shown) to drive the tool holder, and to the current position registers XR, ZR which are incremented by +1 or decremented by -1 by each arriving pulse, in accordance with the direction of tool holder movement. Thus, the current position registers XR, ZR always store the current position of one of the tools.

Following completion of the pulse distribution operation the nose of tool $TL_1$ will be at the machining position A, as shown in Fig. 2(A), and the current position of the tool $TL_1$ (actually the position of the tool nose, or the coordinates of the point A) will have been stored in the current position registers XR, ZR. The pulse distributor issues the distribution end pulse END after completing the pulse distribution operation, the latter pulse incrementing, by +1, the content of the counter contained in the sequence control circuit SC. As a result, the multiplexer MPX now supplies the line LN with the command data at sequence number $N_3$. The command data at sequence number $N_3$ is an absolute position command, as in the immediately preceding case just described, so the circuitry operates in the same fashion. Again, the pulse distributor circuit PD issues a distribution end pulse DEN upon completion of the pulse distribution, and the content of the counter in the sequence control circuit SC is advanced by +1. When this occurs, the multiplexer delivers the command data at the next sequence number, which is $N_4$. Since this data is an incremental command for setting coordinates, the command discrimination circuit CD issues the preset signal PS and sends an add signal to the adder-subtractor circuit AS, causing the latter to execute the operations given in (2) above. The result of these arithmetic operations is the current position of the tool $TL_2$, that is, the current position of the nose of the tool. This position is preset in the current position registers XR, ZR by the preset signal PS. The adder-subtractor circuit AS issues the preset end signal PEN following the preset operation, the signal advancing the counter in the sequence control circuit SC by a further step, so that the multiplexer MPX now delivers the command data at sequence number $N_5$. Machining progresses as the foregoing steps are repeated. It should be noted that the current position of the tool $TL_2$ will be stored in the current position registers XR, ZR until a command for setting coordinates appears in the machining program.

In accordance with the preset invention as described above, current position registers need not be provided for each of the tools mounted on a tool holder, and the tools need not be brought to a specified position one after another when tools are changed. The result is a marked increase in machining efficiency. Moreover, since it is not necessary to manually calculate and to manually enter the current position of a new tool each time a tool is changed, it is possible to provide a numerical control device which is very simple to operate.

While the preferred embodiment described above employs a sequence control circuit to read the command data,

-17-    0046343

the present invention is not limited to such an arrangement; a microprocessor can be substituted for the sequence
control circuit.  Furthermore, the present invention is not
limited to an arrangement having only two tools; three or
more tools may be provided.  Finally, the changes in the
coordinate values U, W need not necessarily be entered by
the command data which follows the G50 command, as described
above.  The tool distances can be stored in memory separately in advance.

As many apparently widely different embodiments of
the present invention can be made without departing from
the spirit and scope thereof, it is to be understood that
the invention is not limited to the specific embodiment
thereof except as defined in the appended claims.

In general terms, there is provided a method and
apparatus for numerically controlling at least two tools
which are arranged to move in unison while maintaining
a constant positional relationship with respect to one
another, the tools being moved relative to a workpiece
on the basis of absolute commands to subject the workpiece
to a prescribed machining operation.  A single current
position register (XR, ZR), consisting of one section
(XR) for storing X coordinates and one section (ZR) for
storing Z coordinates, is provided to store the current
position of a first tool.  Further provided are arithmetic
means (AS), responsive to a command for setting
coordinates, for computing the current position of a
second tool which is to be used next, as well as pulse
distribution means (PD).  The method includes the steps
of storing the position of the first tool in the current
position register (XR, ZR) prior to machining the workpiece with that tool, moving the first tool to machine the workpiece on the basis of the current position and an absolute command, computing the current position of the second tool by the arithmetic means (AS) in response to the command for setting coordinates in effecting a changeover from the first tool to the second tool, storing the computed current position in the current position register (XR, ZR), and moving the second tool to machine the workpiece on the basis of the content of the current position register (XR, ZR) and an absolute command.

Claims:                                                0046343

1.      A method of numerically controlling at least two
tools which are arranged to move in unison while maintaining a constant positional relationship with respect to one
another, the tools being moved relative to a workpiece on
the basis of absolute commands to subject the workpiece to
a prescribed machining operation, which method comprises
the steps of:

        storing the current position of one tool in a current position register prior to machining the workpiece with
said one tool;

        moving said one tool to machine the workpiece by
executing a pulse distribution operation on the basis of
the current position and an absolute command;

        computing the current position of another tool by
arithmetic means in response to a command for setting
coordinates;

        storing the computed current position of said
another tool in said current position register; and

        moving said another tool to machine the workpiece
by executing a pulse distribution operation on the basis
of the content of said current position register and an
absolute command;

        whereby the workpiece is machined first by said
one tool and then by said another tool.

2.      The method according to claim 1, further comprising
the steps of:

        issuing the command for setting the coordinates;

        commanding increments from a tool which is in use
to a tool which will be used next, which increments are made in directions parallel to control axis, 0046343

computing the current position of said tool which will be used next by arithmetic means by employing the content of the current position register and the command increments along the control axis.

3.     The method according to claim 1, or 2 further comprising the steps of:

storing in memory, in advance, increments from one tool to another, which increments are made in directions parallel to a control axis; and

computing, in response to the command for setting coordinates, the current position of the next tool to be used by using the content of the current position register and said commanded increments from the tool which is in use to the tool which will be used next.

4.     An apparatus for numerically controlling at least two tools which are arranged to move in unison while maintaining a constant positional relationship with respect to one another, when the apparatus is in use the tools being moved relative to a workpiece on the basis of absolute commands to subject the workpiece to a prescribed machining operation, which apparatus comprises:

a current position register for storing the current position of one tool;

a pulse distributing circuit for executing a pulse distribution operation on the basis of the current position and an absolute command;

computing means for computing the current position of another tool in response to a command for setting coordinates and memorizing the computing result therein, and

instructing means for instructing command data
for setting the coordinates in addition to machine
program data; wherein the workpiece is to be machined
first by said one tool and then by said another tool.

5.    An apparatus for use in  numerically controlling
at least two tools which are arranged to move in unison
while maintaining a constant positional relationship with
respect to one another, the tools being movable relative
to a workpiece on the basis of absolute commands to
subject the workpiece to a prescribed machining operation,
which apparatus comprises:

a current position register for storing the current
position of one tool prior to machining the workpiece with
said one tool;

a pulse distributor for use in moving said one tool
to machine the workpiece by executing a pulse distribution
operation on the basis of the current position and an
absolute command;

arithmetic means for use in computing the current
position of another tool in response to a command for
setting coordinates;

the arrangement being such that when the apparatus
is in use the computed current position of said another
tool may be stored in said current position register, and

said another tool moved to machine the workpiece
by executing a pulse distribution operation on the basis
of the content of said current position register and
an absolute command, whereby the workpiece may be machined first by said one tool and then by said another tool.

6.     Apparatus according to claim 5, which is operable to provide the further steps of:

issuing the command for setting the coordinates:

commanding increments from a tool which is in use to a tool which will be used next, which increments are made in directions parallel to a control axis, and

computing the current position of said tool which will be used next by the arithmetic means by employing the content of the current position register and the command increments along the control axis.

7.     Apparatus according to claim 5 or 6, which is operable to provide the further steps of:

storing in memory, in advance, increments from one tool to another, which increments are made in directions parallel to a control axis; and

computing, in response to the command for setting coordinates, the current position of the next tool to be used by using the content of the current position register and said commanded increments from the tool which is in use to the tool which will be used next.

# Fig. 1

# Fig. 3

| Machining Program | Contents of Current position Registors (X) , (Z) | Position of tool TLI X₁ , Z₁ | Position of tool TL2 X₂ , Z₂ |
|---|---|---|---|
| N1  G 50<br>X 200<br>Z 400 * | (X) = 200<br>(Z) = 400 | X₁ = 200<br>Z₁ = 400 | X₂ = 190<br>Z₂ = 500 |
| N2  X 100<br>Z 200 * | (X) = 100<br>(Z) = 200 | X₁ = 100<br>Z₁ = 200 | X₂ = 90<br>Z₂ = 300 |
| N3  X 150<br>Z 300 * | (X) = 150<br>(Z) = 300 | X₁ = 150<br>Z₁ = 300 | X₂ = 140<br>Z₂ = 400 |
| N4  G 50<br>U−10<br>W 100 * | (X) = 140<br>(Z) = 400 | X₁ = 150<br>Z₁ = 300 | X₂ = 140<br>Z₂ = 400 |
| N5  X 100<br>Z 200 * | (X) = 100<br>(Z) = 200 | X₁ = 110<br>Z₁ = 100 | X₂ = 100<br>Z₂ = 200 |
| N6 | | | |

# Fig. 2 (A)

# Fig. 2 (B)

# Fig. 2 (C)

# Fig. 2 (D)

# Fig. 2 (E)

# Fig. 4

| N 1 | G 50 |
|---|---|
|  | X 200 |
|  | Z 400 * |
| N 2 | X 100 |
|  | Z 200 * |
| N 3 | X 150 |
|  | Z 300 * |
| N 4 | G 50 |
|  | U -10 |
|  | W 100 * |
| N 5 | X 100 |
|  | Z 200 * |
| N 6 |  |
| . | . |
| . | . |
|  |  |
|  |  |
|  |  |

PM

MPX

CD

DS

LN

AS

(X),(Z)

(x)',(z)'

XP

ZP

PD

XR

ZR

PS

PEN

GS

PEN

DEN

SS

SB

SC

0046343